# EUROPÄISCHE PATENTSCHRIFT

(11) **EP 3 679 641 B1**
(45) Veröffentlichungstag und Bekanntmachung des Hinweises auf die Patenterteilung: **01.09.2021**
(21) Anmeldenummer: 18830221.0
(22) Anmeldetag: 18.12.2018
(51) Int. Cl.: H02K 21/40, H02K 16/04, H02K 9/19

(54) **ROTIERENDE ELEKTRISCHE MASCHINE**
ROTATING ELECTRIC MACHINE
MACHINE ÉLECTRIQUE ROTATIVE

(30) Priorität: 16.01.2018 EP 18151826
(43) Veröffentlichungstag der Anmeldung: 15.07.2020
(73) Patentinhaber: Siemens Aktiengesellschaft, 80333 München (DE)
(72) Erfinder: SEUFERT, Reiner, 97616 Salz (DE); VOLLMER, Rolf, 36129 Gersfeld (DE)
(86) Internationale Anmeldenummer: PCT/EP2018/085446
(87) Internationale Veröffentlichungsnummer: WO 2019/141463

(56) Entgegenhaltungen:
- EP-A1- 2 806 546
- EP-A1- 3 131 189
- DE-A1-102016 106 187

## Beschreibung

Die Erfindung betrifft eine rotierende elektrische Maschine.

Rotierende elektrische Maschinen weisen einen Stator und einen relativ zu dem Stator um eine Drehachse drehbaren Rotor auf. Der Stator und/oder der Rotor weisen Magneten zur Erzeugung von Magnetfeldern auf. Die Magneten sind Elektromagneten und/oder Permanentmagneten und in der Regel an dem Stator und/oder an dem Rotor entlang von Kreisen um die Drehachse angeordnet. Bei großen rotierenden elektrischen Maschinen, das heißt bei großen Radien dieser Kreise, werden entsprechend viele und/oder große Magneten benötigt. Dies führt zu hohen Kosten für die Magnetbestückung derartiger Maschinen.

Die EP 3 131 189 A1 betrifft ist einen Rotor einer elektrischen Maschine, welcher eine glockenförmige Form aufweist, wobei der Rotor einen zylinderförmigen Abschnitt aufweist, wobei der Rotor einen konusförmigen Abschnitt aufweist, wobei der zylinderförmige Abschnitt magnetisch aktive Bereiche und amagnetische Bereiche aufweist.

Die DE 10 2016 106 187 A1 betrifft eine elektrische Maschine, umfassend einen ersten Stator mit mehreren ersten Statorpolen vorbereitet zum Bereitstellen eines festen, in Umfangsrichtung alternierenden Magnetfeldes, einen zweiten Stator mit mehreren zweiten Statorpolen zum Führen eines magnetischen Drehfeldes, mit elektrischen Wicklungen zum Führen eines zu dem magnetischen Drehfeld korrespondierenden elektrischen Drehstrom, und einen zwischen dem ersten und zweiten Stator drehbar gelagerten Modulator, so dass eine Wechselwirkung besteht zwischen dem alternierenden Magnetfeld des ersten Stators, dem magnetischen Drehfeld des zweiten Stators und einer Drehbewegung des Modulators.

Die EP 2 806 546 A1 betrifft eine elektrische Maschine mit einem um eine Drehachse drehbaren rohrförmigen Rotorkörper, wobei der Rotorkörper aus einem ferromagnetischen Material besteht. Ein erster rohrförmiger Statorkörper umfasst mindestens zwei erste Wicklungen, die mit einer elektrischen Schaltung verbindbar sind, wobei die mindestens zwei ersten Wicklungen entlang einer Umfangsrichtung in Bezug aufeinander hintereinander angeordnet sind. Ein zweiter rohrförmiger Statorkörper umfasst mindestens zwei entlang der Umfangsrichtung hintereinander angeordnete Magnetabschnitte, wobei jeder Magnetabschnitt jeweils ein Magnetelement umfasst. Der Rotorkörper ist drehbar zwischen dem ersten Statorkörper und dem zweiten Statorkörper gelagert.

Der Erfindung liegt die Aufgabe zugrunde, eine rotierende elektrische Maschine anzugeben, die insbesondere hinsichtlich der Kosten für die Magnetbestückung verbessert ist.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße rotierende elektrische Maschine gemäß des unabhängigen Anspruchs 1 weist einen Stator und einen relativ zu dem Stator um eine Drehachse drehbaren Rotor auf. Der Rotor weist ein ringförmiges Reaktionselement auf, das entlang eines Reaktionselementkreises um die Drehachse verläuft und mehrere entlang des Reaktionselementkreises hintereinander angeordnete magnetisierbare Bereiche aufweist, wobei zwischen zwei einander benachbarten magnetisierbaren Bereichen jeweils ein nichtmagnetischer Bereich angeordnet ist. Der Stator weist wenigstens ein Segmentpaar zweier Aktivteilsegmente auf, zwischen denen ein Kreisbogen des Reaktionselementkreises verläuft. Ein erstes Aktivteilsegment jedes Segmentpaares weist mehrere entlang des Kreisbogenverlaufs hintereinander angeordnete Elektromagneten auf und das zweite Aktivteilsegment des Segmentpaares weist mehrere entlang des Kreisbogenverlaufs hintereinander angeordnete Permanentmagneten auf.

Bei einer erfindungsgemäßen rotierenden elektrischen Maschine weist nur der Stator aktive magnetische Komponenten, das heißt Elektromagneten und Permanentmagneten, auf, während der Rotor frei von derartigen Komponenten ist und lediglich ein Reaktionselement mit magnetisierbaren Bereichen aufweist.

Außerdem sind die zusammenwirkenden Elektromagneten und Permanentmagneten auf verschiedenen Seiten des Reaktionselements angeordnet. Durch diese Anordnung der Elektromagneten und der Permanentmagneten reduzieren die Permanentmagneten nicht den Bauraum für die Spulenwicklungen der Elektromagneten in einem Aktivteil des Stators. Dies ermöglicht eine Verbesserung der geometrischen Anordnung der Spulenwicklungen der Elektromagneten durch eine Optimierung der Nutgeometrie von Nuten, in denen die Spulenwicklungen verlaufen, und damit eine Verbesserung des magnetischen Kreises und des Wirkungsgrades der elektrischen Maschine gegenüber einer Anordnung von Elektromagneten und Permanentmagneten in demselben Aktivteil der Maschine.

Ferner werden die Permanentmagneten durch die Elektromagneten nicht wesentlich erwärmt, da sie von den Elektromagneten beabstandet auf einer anderen Seite des Reaktionselements angeordnet sind. Dadurch wird der Wirkungsgrad der elektrischen Maschine verbessert, da durch eine Erwärmung der Permanentmagneten entstehende Verluste reduziert werden, beziehungsweise es können zum Erreichen eines angestrebten Wirkungsgrades kostengünstigere Permanentmagneten, beispielsweise Permanentmagneten mit relativ leichten Seltenen Erden, eingesetzt werden als bei einer Anordnung von Elektromagneten und Permanentmagneten in demselben Aktivteil der Maschine.

Die Anordnung der Elektromagneten und Permanentmagneten auf verschiedenen Seiten des Reaktionselements reduziert außerdem die Anziehungskraft des Stators auf das Reaktionselement gegenüber einer Anordnung von Elektromagneten und Permanentmagneten auf derselben Seite des Reaktionselements. Dadurch wird die Lagerung des Reaktionselements entlastet, beziehungsweise es kann eine kostengünstigere Lagerung des Reaktionselements eingesetzt werden als bei einer Anordnung der Elektromagneten und Permanentmagneten auf derselben Seite des Reaktionselements.

Des Weiteren sind die Elektromagneten und Permanentmagneten in Aktivteilsegmenten angeordnet, die jeweils nur in dem Bereich eines Kreisbogens des Reaktionselementkreises, das heißt nur einem Teilbereich des Reaktionselementkreises, angeordnet sind. Dadurch kann der Stator modular mit Aktivteilsegmenten bestückt werden, deren Anzahl und Anordnung flexibel den jeweiligen Anforderungen an die elektrische Maschine angepasst werden können. Insbesondere werden in der Regel Elektromagneten und Permanentmagneten nicht entlang des gesamten Umfangs des Reaktionselements angeordnet, so dass auch dadurch die Anzahl der Magneten und die Kosten für die Magnetbestückung des Stators gegenüber einer Anordnung von Magneten entlang des gesamten Umfangs des Reaktionselements reduziert werden können.

Eine Ausgestaltung der Erfindung sieht vor, dass die Aktivteilsegmente jedes Segmentpaares auf sich bezüglich des Reaktionselementkreises radial gegenüberliegenden Seiten des Reaktionselements angeordnet sind. Diese Ausgestaltung der Erfindung ermöglicht in der Regel eine einfachere Kopplung des Rotors mit einem von der elektrischen Maschine anzutreibenden Element als eine Anordnung der Aktivteilsegmente beispielsweise auf sich bezüglich der Drehachse axial gegenüberliegenden Seiten des Reaktionselements, da eine Anordnung der Aktivteilsegmente auf sich radial gegenüberliegenden Seiten des Reaktionselements eine direkte axiale Verbindung des Reaktionselements mit dem anzutreibenden Element ermöglicht.

Eine weitere Ausgestaltung der Erfindung sieht vor, dass der Stator mehrere Segmentpaare aufweist, die voneinander beabstandet äquidistant entlang des Reaktionselementkreises angeordnet sind. Diese Ausgestaltung der Erfindung ermöglicht eine gleichmäßigere Einwirkung der Aktivteilsegmente auf das Reaktionselement als nur ein Segmentpaar oder eine Anordnung mehrerer Segmentpaare beispielsweise in nur einem Bereich des Reaktionselementkreises.

Eine weitere Ausgestaltung der Erfindung sieht vor, dass der Stator eine gerade Anzahl von Segmentpaaren aufweist und die ersten Aktivteilsegmente je zweier einander benachbarter Segmentpaare auf verschiedenen Seiten des Reaktionselements angeordnet sind. Mit anderen Worten sieht diese Ausgestaltung der Erfindung sieht vor, dass die ersten Aktivteilsegmente entlang des Reaktionselementkreises abwechselnd auf verschiedenen Seiten des Reaktionselements angeordnet sind und die zweiten Aktivteilsegmente entlang des Reaktionselementkreises entsprechend ebenfalls abwechselnd auf verschiedenen Seiten des Reaktionselements angeordnet sind. Dadurch neutralisieren sich die Anziehungskräfte der Aktivteilsegmente auf das Reaktionselement, was die Lagerung des Reaktionselements zusätzlich entlastet.

Eine weitere Ausgestaltung der Erfindung sieht eine Lagervorrichtung zum Lagern des Reaktionselements an dem Stator vor. Dadurch können durch die Lagervorrichtung sehr kleine Luftspalte zwischen dem Reaktionselement und den Aktivteilsegmenten des Stators eingestellt und eingehalten werden, wodurch vorteilhaft sehr hohe Drehmomente durch die Aktivteilsegmente auf das Reaktionselement ausgeübt werden können.

Eine weitere Ausgestaltung der Erfindung sieht vor, dass das Reaktionselement relativ zu dem Stator in einer zu der Drehachse senkrechten Ebene verschiebbar gelagert ist. Mit anderen Worten sieht diese Ausgestaltung der Erfindung vor, dass das Reaktionselement nicht nur um die Drehachse drehbar sondern auch in einer zu der Drehachse senkrechten Ebene verschiebbar gelagert ist, beispielsweise indem die vorgenannte Lagervorrichtung auch kleine Verschiebungen in dieser Ebene ermöglicht. Dadurch können vorteilhaft Fertigungstoleranzen sowie thermisch bedingte Ausdehnungsveränderungen des Reaktionselements und/oder der Aktivteilsegmente ausgeglichen werden.

Eine weitere Ausgestaltung der Erfindung sieht eine Kühlvorrichtung zur Kühlung aller ersten Aktivteilsegmente und/oder aller zweiten Aktivteilsegmente vor. Dadurch können vorteilhaft durch eine Erwärmung der Elektromagneten und/oder Permanentmagneten der Aktivteilsegmente verursachte Verluste reduziert und somit der Wirkungsgrad der elektrischen Maschine erhöht werden.

Eine weitere Ausgestaltung der Erfindung sieht vor, dass je zwei einander benachbarte Permanentmagneten jedes zweiten Aktivteilsegments einander entgegengesetzte magnetische Polungen aufweisen. Dadurch kann vorteilhaft der magnetische Antrieb durch die Permanentmagneten realisiert werden.

Eine weitere Ausgestaltung der Erfindung sieht vor, dass jedem Elektromagnet des ersten Aktivteilsegments jedes Segmentpaares zwei einander benachbarte Permanentmagneten des zweiten Aktivteilsegments des Segmentpaares gegenüberliegen. Dadurch wird vorteilhaft die Anordnung der Permanentmagneten des zweiten Aktivteils der Anordnung der Elektromagneten des ersten Aktivteils angepasst.

Eine weitere Ausgestaltung der Erfindung sieht vor, dass das erste Aktivteilsegment jedes Segmentpaares zwölf Elektromagneten aufweist. Beispielsweise weist das Reaktionselement dabei in dem Bereich jedes Segmentpaares siebzehn oder neunzehn magnetisierbare Bereiche auf. Die Anordnung von zwölf Elektromagneten in einem ersten Aktivteilsegment und die Anordnung von siebzehn oder neunzehn magnetisierbaren Bereichen des Reaktionselements im Bereich dieser zwölf Elektromagneten haben sich überraschend als besonders effektiv herausgestellt.

Eine weitere Ausgestaltung der Erfindung sieht vor, dass die Elektromagneten des ersten Aktivteilsegments jedes Segmentpaares mit einem dreiphasigen elektrischen Stromsystem gespeist werden, wobei jeder Elektromagnet einer Phase des Stromsystems zugeordnet ist. Dies ermöglicht vorteilhaft die Verwendung eines dreiphasigen elektrischen Stromsystems zum Betrieb der elektrischen Maschine. Beispielsweise bilden dabei die Elektromagneten jeder Phase des Stromsystems Magnetpaare von je zwei einander benachbarten Elektromagneten, die voneinander verschiedene magnetische Polungen aufweisen, zwischen zwei Magnetpaaren jeder Phase liegt je ein Magnetpaar jeder der beiden anderen Phasen und je zwei einander benachbarte Elektromagneten voneinander verschiedener Phasen weisen dieselbe magnetische Polung auf. Unter einem Elektromagneten einer Phase des Stromsystems wird dabei ein dieser Phase zugeordneter Elektromagnet verstanden. Die vorgenannte Zuordnung der Elektromagneten zu den Phasen und deren Polung hat sich als besonders vorteilhaft erwiesen.

Eine weitere Ausgestaltung der Erfindung sieht vor, dass die nichtmagnetischen Bereiche des Reaktionselements aus einem keramischen Material gefertigt sind. Keramische Materialien eignen sich aufgrund ihrer magnetischen und mechanischen Eigenschaften besonders zur Fertigung der nichtmagnetischen Bereiche des Reaktionselements.

Eine weitere Ausgestaltung der Erfindung sieht vor, dass die magnetisierbaren Bereiche des Reaktionselements aus einem weichmagnetischen Material gefertigt sind. Weichmagnetische Materialien lassen sich in einem Magnetfeld leicht magnetisieren und eignen sich daher besonders vorteilhaft zur Fertigung der magnetisierbaren Bereiche des Reaktionselements.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein erstes Ausführungsbeispiel einer rotierenden elektrischen Maschine in einer Schnittdarstellung mit einer zu der Drehachse der Maschine senkrechten Schnittebene,
- FIG 2: eine Schnittdarstellung eines Segmentpaares zweier Aktivteilsegmente und eines Reaktionselements einer rotierenden elektrischen Maschine,
- FIG 3: eine perspektivische Darstellung eines Segmentpaares zweier Aktivteilsegmente und eines Reaktionselements einer rotierenden elektrischen Maschine,
- FIG 4: eine Schnittdarstellung eines ersten Aktivteilsegments einer rotierenden elektrischen Maschine,
- FIG 5: ein zweites Ausführungsbeispiel einer rotierenden elektrischen Maschine in einer Schnittdarstellung mit einer Schnittebene, in der die Drehachse der Maschine liegt.

Einander entsprechende Teile sind in den Figuren mit denselben Bezugszeichen versehen.

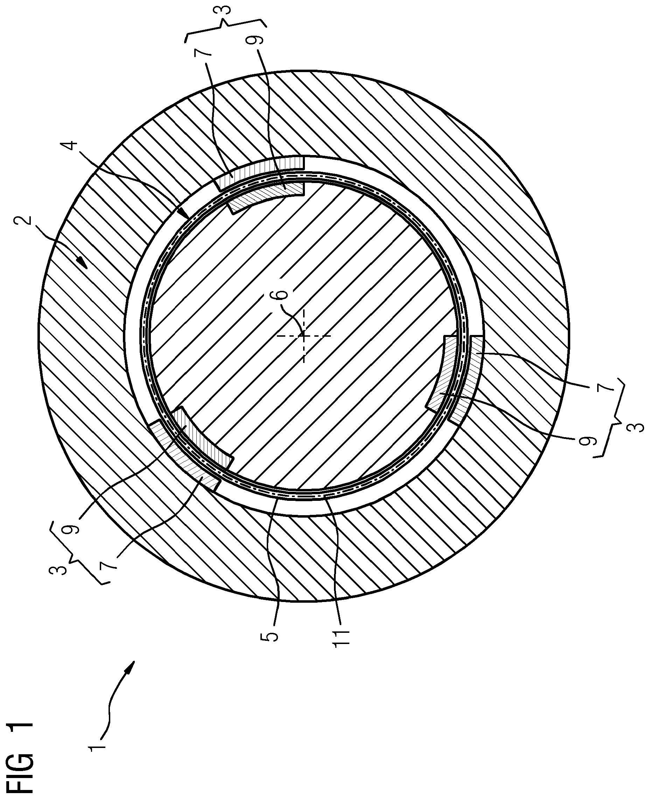

Figur 1 zeigt schematisch ein erstes Ausführungsbeispiel einer rotierenden elektrischen Maschine 1. Die elektrische Maschine 1 weist einen Stator 2 und einen relativ zu dem Stator 2 um eine Drehachse 6 drehbaren Rotor 4 auf. Figur 1 zeigt eine Schnittdarstellung mit einer zu der Drehachse 6 senkrechten Schnittebene.

Der Rotor 4 weist ein ringförmiges Reaktionselement 5 auf, das entlang eines Reaktionselementkreises 11 um die Drehachse 6 verläuft.

Der Stator 2 weist drei voneinander beabstandet äquidistant entlang des Reaktionselementkreises 11 angeordnete Segmentpaare 3 je zweier Aktivteilsegmente 7, 9 auf. Die beiden Aktivteilsegmente 7, 9 jedes Segmentpaares 3 sind auf sich bezüglich des Reaktionselementkreises 11 radial gegenüberliegenden Seiten des Reaktionselements 5 angeordnet, so dass zwischen den beiden Aktivteilsegmenten 7, 9 ein Kreisbogen des Reaktionselementkreises 11 verläuft.

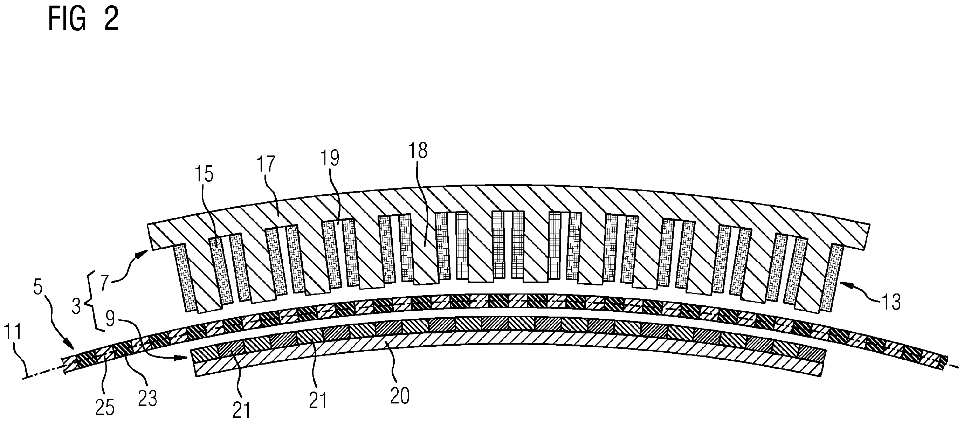

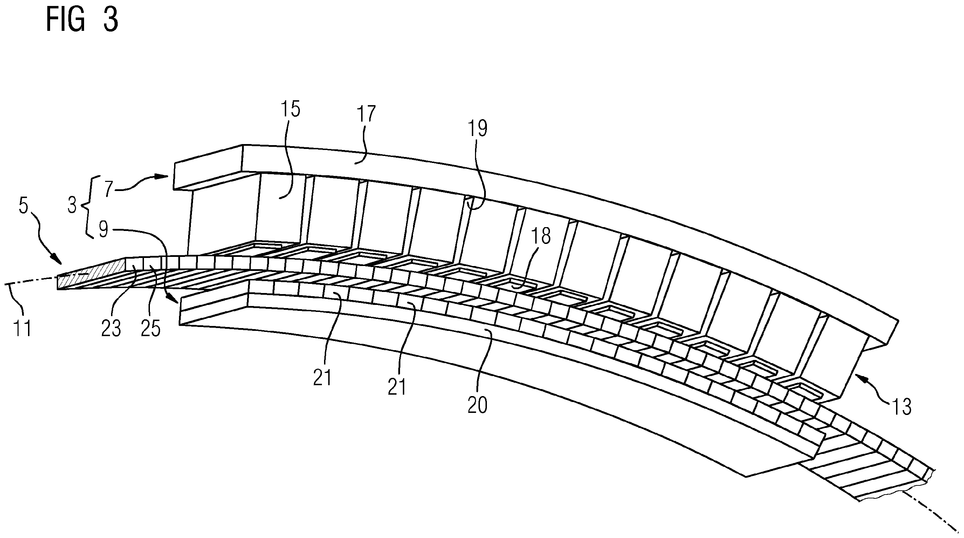

Die Figuren 2 und 3 zeigen jeweils ein Segmentpaar 3 und einen Abschnitt des Reaktionselements 5 der in Figur 1 gezeigten rotierenden elektrischen Maschine 1. Dabei zeigt Figur 2 eine Schnittdarstellung und Figur 3 zeigt eine perspektivische Darstellung.

Ein erstes Aktivteilsegment 7 jedes Segmentpaares 3 weist mehrere Elektromagneten 13 auf, die entlang des Kreisbogenverlaufs des zwischen den beiden Aktivteilsegmenten 7, 9 des Segmentpaares 3 verlaufenden Kreisbogens des Reaktionselementkreises 11 hintereinander angeordnet sind. Die Elektromagneten 13 weisen jeweils eine Spulenwicklung 15 einer elektrischen Spule auf. Das erste Aktivteil 7 weist ferner ein Aktivteilblechpaket 17 mit dem zweiten Aktivteilsegment 9 zugewandten Zähnen 18 und zwischen den Zähnen 18 verlaufenden Nuten 19 auf, wobei um jeden Zahn 18 eine Spulenwicklung 15 gewickelt ist, so dass durch jede Nut 19 die Spulenwicklungen 15 zweier Elektromagneten 13 verlaufen. In anderen Ausführungsbeispielen kann das erste Aktivteilsegment 7 statt nur ein Aktivteilblechpaket 17 mehrere Aktivteilblechpakete 17 für jeweils einen Elektromagneten 13 oder mehrere Elektromagneten 13 aufweisen.

Das zweite Aktivteilsegment 9 jedes Segmentpaares 3 weist mehrere auf einem Permanentmagnetenträger 20 entlang des Kreisbogenverlaufs hintereinander angeordnete Permanentmagneten 21 auf, wobei jedem Elektromagnet 13 des ersten Aktivteilsegments 7 des Segmentpaares 3 zwei einander benachbarte Permanentmagneten 21 des zweiten Aktivteilsegments 9 gegenüberliegen. Je zwei einander benachbarte Permanentmagneten 21 jedes zweiten Aktivteilsegments 7 weisen einander entgegengesetzte magnetische Polungen auf.

Die ersten Aktivteilsegmente 7 sind jeweils auf der von der Drehachse 6 abgewandten Seite des Reaktionselements 5 angeordnet und die zweiten Aktivteilsegmente 9 sind jeweils auf der der Drehachse 6 zugewandten Seite des Reaktionselements 5 angeordnet.

Das Reaktionselement 5 weist mehrere nichtmagnetische Bereiche 23 und mehrere magnetisierbare Bereiche 25 auf. Die nichtmagnetischen Bereiche 23 und die magnetisierbaren Bereiche 25 sind abwechselnd entlang des Reaktionselementkreises 11 angeordnet, so dass zwischen je zwei benachbarten magnetisierbaren Bereichen 25 ein nichtmagnetischer Bereich 23 angeordnet ist und zwischen je zwei benachbarten nichtmagnetischen Bereichen 23 ein magnetisierbarer Bereich 25 angeordnet ist.

Die nichtmagnetischen Bereiche 23 sind jeweils aus einem nichtmagnetischen Material gefertigt, beispielsweise aus einem keramischen Material oder aus einem faserverstärkten Kunststoff.

Die magnetisierbaren Bereiche 25 sind jeweils zumindest teilweise aus einem magnetisierbaren Material, beispielsweise aus einem weichmagnetischen Material gefertigt. Vorzugsweise weisen die magnetisierbaren Bereiche 25 jeweils ein aus Elektroblechen bestehendes Blechpaket auf.

Die Ausdehnung eines magnetisierbaren Bereichs 25 entlang des Reaktionselementkreises 11 beträgt beispielsweise zwischen 80 % und 120 % der Ausdehnung eines nichtmagnetischen Bereichs 23.

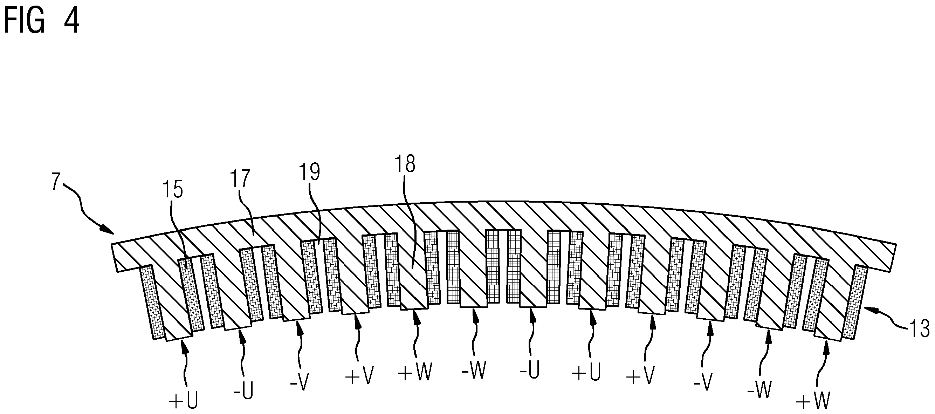

Figur 4 zeigt eine Schnittdarstellung eines ersten Aktivteilsegments 7. Die Elektromagneten 13 des ersten Aktivteilsegments 7 werden mit einem dreiphasigen elektrischen Stromsystem gespeist, wobei jeder Elektromagnet 13 einer Phase U, V, W des Stromsystems zugeordnet ist. Dabei bilden die Elektromagneten 13 jeder Phase U, V, W des Stromsystems Magnetpaare von je zwei einander benachbarten Elektromagneten 13, die voneinander verschiedene magnetische Polungen aufweisen, zwischen zwei Magnetpaaren jeder Phase U, V, W liegt je ein Magnetpaar jeder der beiden anderen Phasen U, V, W und je zwei einander benachbarte Elektromagneten 13 voneinander verschiedener Phasen U, V, W weisen dieselbe magnetische Polung auf.

In dem in den Figuren 2 bis 4 gezeigten Ausführungsbeispiel weist jedes erste Aktivteilsegment 7 zwölf Elektromagneten 13 auf und jedes zweite Aktivteilsegment 9 weist vierundzwanzig Permanentmagneten 21 auf. Das Reaktionselement 5 weist in dem Bereich eines Segmentpaares 3 siebzehn magnetisierbare Bereiche 25 auf. In anderen Ausführungsbeispielen kann ein Segmentpaar 3 andere Anzahlen von Elektromagneten 13 und Permanentmagneten 21 aufweisen und das Reaktionselement 5 kann eine andere Anzahl von magnetisierbaren Bereichen 25 und nichtmagnetischen Bereichen 23 im Bereich des Bereichs eines Segmentpaares 3 aufweisen. Ferner kann bei anderen Ausführungsbeispielen eine von Figur 4 abweichende Zuordnung der Elektromagneten 13 zu den Phasen U, V, W vorgesehen sein.

Jedoch hat es sich als besonders vorteilhaft herausgestellt, wenn ein erstes Aktivteilsegment 7 zwölf Elektromagneten 13 aufweist, ein zweites Aktivteilsegment 9 vierundzwanzig Permanentmagneten 21 aufweist, das Reaktionselement 5 in dem Bereich eines Segmentpaares 3 siebzehn oder neunzehn magnetisierbare Bereiche 25 aufweist und die Elektromagneten 13 den Phasen U, V, W wie in Figur 4 zugeordnet sind.

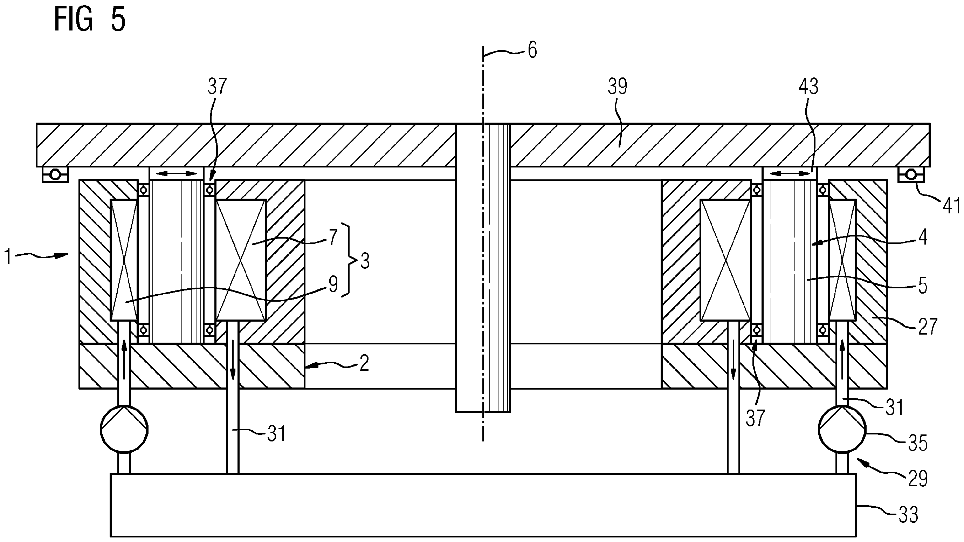

Figur 5 zeigt ein zweites Ausführungsbeispiel einer rotierenden elektrischen Maschine 1. Die elektrische Maschine 1 weist einen Stator 2 und einen relativ zu dem Stator 2 um eine Drehachse 6 drehbaren Rotor 4 auf. Figur 5 zeigt eine Schnittdarstellung mit einer Schnittebene, in der die Drehachse 6 liegt.

Der Rotor 4 weist ein ringförmiges Reaktionselement 5 auf, das entlang eines Reaktionselementkreises 11 um die Drehachse 3 verläuft und wie das Reaktionselement 5 des in dem anhand der Figuren 1 bis 4 beschriebenen Ausführungsbeispiels ausgebildet ist.

Der Stator 2 weist mehrere voneinander beabstandet entlang des Reaktionselementkreises 11 angeordnete Segmentpaare 3 zweier Aktivteilsegmente 7, 9 auf. Die beiden Aktivteilsegmente 7, 9 jedes Segmentpaares 3 sind auf sich bezüglich des Reaktionselementkreises 11 radial gegenüberliegenden Seiten des Reaktionselements 5 an einem Segmentträger 27 angeordnet, so dass zwischen den beiden Aktivteilsegmenten 7, 9 ein Kreisbogen des Reaktionselementkreises 11 verläuft. Die beiden Aktivteilsegmente 7, 9 jedes Segmentpaares 3 sind wie die Aktivteilsegmente 7, 9 des in dem anhand der Figuren 1 bis 4 beschriebenen Ausführungsbeispiels ausgebildet, wobei wiederum ein erstes Aktivteilsegment 7 jedes Segmentpaares 3 Elektromagneten 13 aufweist und das zweite Aktivteilsegment 9 Permanentmagneten 21 aufweist.

Im Unterschied zu dem anhand der Figuren 1 bis 4 beschriebenen Ausführungsbeispiel sind die ersten Aktivteilsegmente 7 des in Figur 5 dargestellten Ausführungsbeispiels jedoch jeweils auf der der Drehachse 6 zugewandten Seite des Reaktionselements 5 angeordnet und die zweiten Aktivteilsegmente 9 sind jeweils auf der von der Drehachse 6 abgewandten Seite des Reaktionselements 5 angeordnet. Ferner weist der Stator 2 dieses Ausführungsbeispiels eine gerade Anzahl von Segmentpaaren 3 auf, wobei sich je zwei Segmentpaare 3 bezüglich des Reaktionselementkreises 11 diametral gegenüberliegen.

Die elektrische Maschine 1 weist ferner eine Kühlvorrichtung 29 zur Kühlung der Aktivteilsegmente 7, 9 auf. Die Kühlvorrichtung 29 weist einen Kühlmittelkreislauf auf, in dem ein Kühlmittel, beispielsweise Kühlwasser, in Kühlrohren 31 aus einem Kühlmittelreservoir 33 mittels Pumpen 35 zu den Aktivteilsegmenten 7, 9 und von den Aktivteilsegmenten 7, 9 zurück in das Kühlmittelreservoir 33 geführt wird.

Des Weiteren weist die elektrische Maschine 1 eine Lagervorrichtung 37 zum Lagern des Reaktionselements 5 an dem Stator 2 auf. Die Lagervorrichtung 37 weist beispielsweise Gleitlager oder Wälzlager auf, mit denen die der Drehachse 6 zugewandte Seite und die von der Drehachse 6 abgewandte Seite des Reaktionselements 5 jeweils an dem Stator 2 gelagert sind. Ferner kann das Reaktionselement 5 relativ zu dem Stator 2 durch die Lagervorrichtung 37 in einer zu der Drehachse 6 senkrechten Ebene verschiebbar gelagert sein.

Der Rotor 4 ist mit einem von Stützlagern 41 um die Drehachse 6 drehbar gelagerten Antriebstisch 39 verbunden, über den beispielsweise ein Teleskop, ein Drehtisch, ein Windkraftturm oder ein Schwungrad mit der elektrischen Maschine 1 drehbar ist. Dabei sind der Rotor 4 und der Drehtisch 6 relativ zueinander in einer zu der Drehachse 6 senkrechten Ebene verschiebbar gelagert, beispielsweise durch Federelemente 43, die jeweils in einer bezüglich des Reaktionselementkreises 11 radialen Richtung elastisch verformbar sind und das Reaktionselement 5 mit dem Antriebstisch 39 verbinden.

Die anhand der Figuren 1 bis 5 beschriebenen Ausführungsbeispiele einer elektrischen Maschine 1 können in verschiedener Weise abgewandelt werden. Beispielsweise kann auch das anhand der Figuren 1 bis 4 beschriebene Ausführungsbeispiel eine Kühlvorrichtung 29 und/oder eine Lagervorrichtung 37 wie das anhand von Figur 5 beschriebene Ausführungsbeispiel aufweisen. Ferner können sich die beiden Aktivteilsegmente 7, 9 eines Segmentpaares 3 statt in bezüglich des Reaktionselementkreises 11 radialer Richtung auch in einer anderen Richtung gegenüberliegen. Beispielsweise können sich die beiden Aktivteilsegmente 7, 9 eines Segmentpaares 3 in einer bezüglich der Drehachse 6 axialen Richtung gegenüberliegen, so dass sie auf verschiedenen Seiten der Ebene, in der der Reaktionselementkreis 11 verläuft, angeordnet sind. Des Weiteren kann der Stator 2 eine gerade Anzahl von Segmentpaaren 3 aufweisen, wobei die ersten Aktivteilsegmente 7 je zweier einander benachbarter Segmentpaare 3 auf verschiedenen Seiten des Reaktionselements 5 angeordnet sind.

## Patentansprüche

1. Rotierende elektrische Maschine (1) mit einem Stator (2) und einem relativ zu dem Stator (2) um eine Drehachse (6) drehbaren Rotor (4),
- wobei der Rotor (4) ein ringförmiges Reaktionselement (5) aufweist, das entlang eines Reaktionselementkreises (11) um die Drehachse (6) verläuft und mehrere entlang des Reaktionselementkreises (11) hintereinander angeordnete magnetisierbare Bereiche (25) aufweist, wobei zwischen zwei einander benachbarten magnetisierbaren Bereichen (25) jeweils ein nichtmagnetischer Bereich (23) angeordnet ist,
- wobei der Stator (2) wenigstens ein Segmentpaar (3) zweier Aktivteilsegmente (7, 9) aufweist, zwischen denen ein Kreisbogen des Reaktionselementkreises (11) verläuft, wobei ein erstes Aktivteilsegment (7) jedes Segmentpaares (3) mehrere entlang des Kreisbogenverlaufs hintereinander angeordnete Elektromagneten (13) aufweist und das zweite Aktivteilsegment (9) des Segmentpaares (3) mehrere entlang des Kreisbogenverlaufs hintereinander angeordnete Permanentmagneten (21) aufweist und
- wobei die Elektromagneten (13) und die Permanentmagneten (21) in Aktivteilsegmenten (7, 9) angeordnet sind, die jeweils nur in einem Teilbereich des Reaktionselementkreises (11) angeordnet sind.

2. Rotierende elektrische Maschine (1) nach Anspruch 1, **dadurch gekennzeichnet, dass** die Anordnung der Elektromagneten (13) und der Permanentmagneten (21) lediglich in einem Teilbereich des Reaktionselementkreises (11) zur modularen Bestückung des Stators (2) mit Aktivteilsegmenten (7, 9) vorgesehen ist, wobei die Anzahl und Anordnung der Elektromagnete (13) und der Permanentmagnete (21) flexibel den jeweiligen Anforderungen an die elektrische Maschine (1) anpassbar sind.

3. Rotierende elektrische Maschine (1) nach einem der Ansprüche 1 oder 2,
**dadurch gekennzeichnet, dass** die Elektromagnete (13) und Permanentmagnete (21) für eine Reduzierung der Kosten für die Magnetbestückung nicht entlang des gesamten Umfangs des Reaktionselements (5) angeordnet sind.

4. Rotierende elektrische Maschine (1) nach einem der vorhergehenden Ansprüche,
**dadurch gekennzeichnet, dass** die Aktivteilsegmente (7, 9) jedes Segmentpaares (3) auf sich bezüglich des Reaktionselementkreises (11) radial gegenüberliegenden Seiten des Reaktionselements (5) angeordnet sind.

5. Rotierende elektrische Maschine (1) nach einem der vorhergehenden Ansprüche,
**dadurch gekennzeichnet, dass** der Stator (2) mehrere Segmentpaare (3) aufweist, die voneinander beabstandet äquidistant entlang des Reaktionselementkreises (11) angeordnet sind.

6. Rotierende elektrische Maschine (1) nach einem der vorhergehenden Ansprüche,
**dadurch gekennzeichnet, dass** der Stator (2) eine gerade Anzahl von Segmentpaaren (3) aufweist und die ersten Aktivteilsegmente (7) je zweier einander benachbarter Segmentpaare (3) auf verschiedenen Seiten des Reaktionselements (5) angeordnet sind.

7. Rotierende elektrische Maschine (1) nach einem der vorhergehenden Ansprüche,
**gekennzeichnet durch** eine Lagervorrichtung (37) zum Lagern des Reaktionselements (5) an dem Stator (2).

8. Rotierende elektrische Maschine (1) nach Anspruch 7,
**dadurch gekennzeichnet, dass** die Lagervorrichtung (37) Gleitlager oder Wälzlager aufweist, mit denen die der Drehachse (6) zugewandte Seite und die von der Drehachse (6) abgewandte Seite des Reaktionselements (5) jeweils an dem Stator (2) gelagert sind.

9. Rotierende elektrische Maschine (1) nach einem der vorhergehenden Ansprüche,
**dadurch gekennzeichnet, dass** das Reaktionselement (5) relativ zu dem Stator (2) in einer zu der Drehachse (6) senkrechten Ebene verschiebbar gelagert ist.

10. Rotierende elektrische Maschine (1) nach einem der vorhergehenden Ansprüche,
**gekennzeichnet durch** eine Kühlvorrichtung (29) zur Kühlung aller ersten Aktivteilsegmente (7) und/oder aller zweiten Aktivteilsegmente (9).

11. Rotierende elektrische Maschine (1) nach einem der vorhergehenden Ansprüche,
**dadurch gekennzeichnet, dass** je zwei einander benachbarte Permanentmagneten (13) jedes zweiten Aktivteilsegments (9) einander entgegengesetzte magnetische Polungen aufweisen.

12. Rotierende elektrische Maschine (1) nach einem der vorhergehenden Ansprüche,
**dadurch gekennzeichnet, dass** jedem Elektromagnet (13) des ersten Aktivteilsegments (7) jedes Segmentpaares (3) zwei einander benachbarte Permanentmagneten (21) des zweiten Aktivteilsegments (9) des Segmentpaares (3) gegenüberliegen.

13. Rotierende elektrische Maschine (1) nach einem der vorhergehenden Ansprüche,
**dadurch gekennzeichnet, dass** das erste Aktivteilsegment (7) jedes Segmentpaares (3) zwölf Elektromagneten (13) aufweist.

14. Rotierende elektrische Maschine (1) nach Anspruch 13,
**dadurch gekennzeichnet, dass** das Reaktionselement (5) in dem Bereich jedes Segmentpaares (3) siebzehn oder neunzehn magnetisierbare Bereiche (25) aufweist.

15. Rotierende elektrische Maschine (1) nach einem der vorhergehenden Ansprüche,
**dadurch gekennzeichnet, dass** die Elektromagneten (13) des ersten Aktivteilsegments (7) jedes Segmentpaares (3) mit einem dreiphasigen elektrischen Stromsystem gespeist werden, wobei jeder Elektromagnet (13) einer Phase (U, V, W) des Stromsystems zugeordnet ist.

16. Rotierende elektrische Maschine (1) nach Anspruch 15,
**dadurch gekennzeichnet, dass** die Elektromagneten (13) jeder Phase des Stromsystems Magnetpaare von je zwei einander benachbarten Elektromagneten (13) bilden, die voneinander verschiedene magnetische Polungen aufweisen, und zwischen zwei Magnetpaaren jeder Phase (U, V, W) je ein Magnetpaar jeder der beiden anderen Phasen (U, V, W) liegt und je zwei einander benachbarte Elektromagneten (13) voneinander verschiedener Phasen (U, V, W) dieselbe magnetische Polung aufweisen.

17. Rotierende elektrische Maschine (1) nach einem der vorhergehenden Ansprüche,
**dadurch gekennzeichnet, dass** die nichtmagnetischen Bereiche (23) des Reaktionselements (5) aus einem keramischen Material gefertigt sind.

18. Rotierende elektrische Maschine (1) nach einem der vorhergehenden Ansprüche,
**dadurch gekennzeichnet, dass** die magnetisierbaren Bereiche (25) des Reaktionselements (5) aus einem weichmagnetischen Material gefertigt sind.

## Claims

1. Rotating electric machine (1) with a stator (2) and a rotor (4) which is rotatable about an axis of rotation (6) relative to the stator (2), wherein
- the rotor (4) has a ring-shaped reaction element (5), which runs along a reaction element circle (11) about the axis of rotation (6) and has a number of magnetizable regions (25) arranged in series along the reaction element circle (11), wherein a non-magnetic region (23) is arranged between two adjacent magnetizable regions (25) in each case,
- the stator (2) has at least one segment pair (3) of two active part segments (7, 9), between which a circular arc of the reaction element circle (11) runs, wherein a first active part segment (7) of each segment pair (3) has a number of electromagnets (13) arranged in series along the course of the circular arc and the second active part segment (9) of the segment pair (3) has a number of permanent magnets (21) arranged in series along the course of the circular arc and
- the electromagnets (13) and the permanent magnets (21) are arranged in active part segments (7, 9), which are arranged in each case only in a sub region of the reaction element circle (11).

2. Rotating electric machine (1) according to claim 1,
**characterised in that**
the arrangement of the electromagnets (13) and the permanent magnets (21) is only provided in a sub region of the reaction element circle (11) in order to equip the stator (2) with active part segments (7, 9) in a modular fashion, wherein the number and arrangement of the electromagnets (13) and the permanent magnets (21) can be flexibly adjusted to the respective requirements on the electric machine (1).

3. Rotating electric machine (1) according to one of claims 1 or 2,
**characterised in that**
in order to reduce the costs for the provision of magnets, the electromagnets (13) and permanent magnets (21) are not arranged along the entire periphery of the reaction element (5) .

4. Rotating electric machine (1) according to one of the preceding claims, **characterised in that**
the active part segments (7, 9) of each segment pair (3) are arranged on sides of the reaction element (5) which oppose one another radially with respect to the reaction element circle (11).

5. Rotating electric machine (1) according to one of the preceding claims,
**characterised in that**
the stator (2) has a number of segment pairs (3), which are arranged equidistantly from one another along the reaction element circle (11).

6. Rotating electric machine (1) according to one of the preceding claims,
**characterised in that**
the stator (2) has an even number of segment pairs (3) and the first active part segments (7) of each two adjacent segment pairs (3) are arranged on different sides of the reaction element (5).

7. Rotating electric machine (1) according to one of the preceding claims,
**characterised by**
a mounting apparatus (37) for mounting the reaction element (5) on the stator (2).

8. Rotating electric machine (1) according to claim 7,
**characterised in that**
the mounting apparatus (37) has sliding or roller bearings, with which the side facing the axis of rotation (6) and the side of the reaction element (5) facing away from the axis of rotation (6) are mounted in each case on the stator (2).

9. Rotating electric machine (1) according to one of the preceding claims,
**characterised in that**
the reaction element (5) is mounted displaceably in a plane at right angles to the axis of rotation (6) relative to the stator (2).

10. Rotating electric machine (1) according to one of the preceding claims,
**characterised by**
a cooling apparatus (29) for cooling all first active part segments (7) and/or all second active part segments (9).

11. Rotating electric machine (1) according to one of the preceding claims,
**characterised in that**
each two adjacent permanent magnets (13) of each second active part segment (9) have opposite magnetic polarities.

12. Rotating electric machine (1) according to one of the preceding claims,
**characterised in that**
two adjacent permanent magnets (21) of the second active part segment (9) of the segment pair (3) face each electromagnet (13) of the first active part segment (7) of each segment pair (3).

13. Rotating electric machine (1) according to one of the preceding claims,
**characterised in that**
the first active part segment (7) of each segment pair (3) has twelve electromagnets (13).

14. Rotating electric machine (1) according to claim 13,
**characterised in that**
the reaction element (5) in the region of each segment pair (3) has seventeen or nineteen magnetizable regions (25).

15. Rotating electric machine (1) according to one of the preceding claims,
**characterised in that**
the electromagnets (13) of the first active part segment (7) of each segment pair (3) are fed with a three-phase electric current system, wherein each electromagnet (13) is assigned to a phase (U, V, W) of the current system.

16. Rotating electric machine (1) according to claim 15,
**characterised in that**
the electromagnets (13) of each phase of the current system form magnet pairs of each two electromagnets (13) adjacent to one another, which have magnetic polarities which differ from one another and a magnet pair of each of the two other phases (U, V, W) lies between two magnet pairs of each phase (U, V, W) and two adjacent electromagnets (13) of phases (U, V, W) which differ from one another have the same magnetic polarity.

17. Rotating electric machine (1) according to one of the preceding claims,
**characterised in that**
the non-magnetic regions (23) of the reaction element (5) are manufactured from a ceramic material.

18. Rotating electric machine (1) according to one of the preceding claims,
**characterised in that** the magnetizable regions (25) of the reaction element (5) are produced from a soft-magnetic material.

## Revendications

1. Machine (1) électrique tournante comprenant un stator (2) et un rotor (4) pouvant tourner autour d'un axe (6) de rotation par rapport au stator (2),
- dans laquelle le rotor (4) a un élément (5) de réaction annulaire, qui s'étend autour de l'axe (6) de rotation le long d'un cercle (11) d'élément de réaction et qui a plusieurs parties (25) aimantables les unes derrière les autres le long du cercle (11) d'élément de réaction, dans laquelle entre deux parties (25) aimantables voisines l'une de l'autre est disposée respectivement une partie (23) amagnétique,
- dans laquelle le stator (2) a au moins une paire (3) de deux segments (7, 9) partiels actifs, entre lesquels s'étend un arc de cercle du cercle (11) d'élément de réaction, dans laquelle un premier segment (7) partiel actif de chaque paire (3) de segments a plusieurs électroaimants (13) disposés les uns derrière les autres le long de la courbe de l'arc de cercle et en ce que le deuxième segment (9) partiel actif de la paire (3) de segments a plusieurs aimants (21) permanents disposés les uns derrière les autres le long de la courbe de l'arc de cercle et
- dans laquelle les électroaimants (13) et les aimants (21) permanents sont disposés dans des segments (7, 9) partiels actifs, qui sont disposés respectivement seulement dans une partie partielle du cercle (11) d'élément de réaction.

2. Machine (1) électrique tournante suivant la revendication 1,
**caractérisée en ce que** l'agencement des électroaimants (13) et des aimants (21) permanents est prévu seulement dans une partie partielle du cercle (11) de l'élément de réaction pour l'équipement modulaire du stator (2) en segments (7, 9) partiels actifs, le nombre et l'agencement des électroaimants (13) et des aimants (21) permanents pouvant être adaptés de manière souple aux exigences respectives de la machine (1) électrique.

3. Machine (1) électrique tournante suivant l'une des revendications 1 ou 2,
**caractérisée en ce que** les électroaimants (13) et les aimants (21) permanents ne sont pas, en vue de réduire les coûts de l'équipement en aimants, disposés le long de tout le pourtour de l'élément (5) de réaction.

4. Machine (1) électrique tournante suivant l'une des revendications précédentes,
**caractérisée en ce que** les segments (7, 9) partiels actifs de chaque paire (3) de segments sont disposés sur des côtés, opposés radialement par rapport au cercle (11) d'élément de réaction, de l'élément (5) de réaction.

5. Machine (1) électrique tournante suivant l'une des revendications précédentes,
**caractérisée en ce que** le stator (2) a plusieurs paires (3) de segments, qui sont disposés de manière équidistante à distance les uns des autres le long du circuit (11) d'élément de réaction.

6. Machine (1) électrique tournante suivant l'une des revendications précédentes,
**caractérisée en ce que** le stator (2) a un nombre paire de paires (3) de segments et les premiers segments (7) partiels actifs de respectivement deux paires (3) de segments voisines l'une de l'autre sont disposées sur des côtés différents de l'élément (5) de réaction.

7. Machine (1) électrique tournante suivant l'une des revendications précédentes,
**caractérisée par** un système (37) de palier pour porter l'élément (5) de réaction sur le stator (2).

8. Machine (1) électrique tournante suivant la revendication 7,
**caractérisée en ce que** le système (37) de palier a des paliers lisses ou des paliers à roulements, par lesquels le côté, tourné vers l'axe (6) de rotation, et le côté, loin de l'axe (6) de rotation, de l'élément (5) de réaction sont montés respectivement sur le stator (2).

9. Machine (1) électrique tournante suivant l'une des revendications précédentes,
**caractérisée en ce que** l'élément (5) de réaction est monté coulissant par rapport au stator (2) dans un plan perpendiculaire à l'axe (6) de rotation.

10. Machine (1) électrique tournante suivant l'une des revendications précédentes,
**caractérisée par** un système (29) de refroidissement pour refroidir tous les premiers segments (7) partiels actifs et/ou tous les deuxièmes segments (9) partiels actifs.

11. Machine (1) électrique tournante suivant l'une des revendications précédentes,
**caractérisée en ce que** respectivement deux aimants (13) permanents voisins l'un de l'autre de chaque deuxième segment (9) partiel actif ont des polarités magnétiques opposées l'une à l'autre.

12. Machine (1) électrique tournante suivant l'une des revendications précédentes,
**caractérisée en ce que** à chaque électroaimant (13) du premier segment (7) partiel actif de chaque paire (3) de segments sont opposés des aimants (21) permanents voisins l'un de l'autre du deuxième segment (9) partiel actif de la paire (3) de segments.

13. Machine (1) électrique tournante suivant l'une des revendications précédentes,
**caractérisée en ce que** le premier segment (7) partiel actif de chaque paire (3) de segments a douze électroaimants (13).

14. Machine (1) électrique tournante suivant la revendication 13,
**caractérisée en ce que** l'élément (5) de réaction a dans la partie de chaque paire (3) de segments dix-sept ou dix-neuf parties (25) aimantables.

15. Machine (1) électrique tournante suivant l'une des revendications précédentes,
**caractérisée en ce que** les électroaimants (13) du premier segment (7) partiel actif de chaque paire (3) de segments sont alimentés par un système de courant électrique triphasé, chaque électroaimant (13) étant associé à une phase (U, V, W) du système de courant.

16. Machine (1) électrique tournante suivant la revendication 15,
**caractérisée en ce que** les électroaimants (13) de chaque phase du système de courant forment des paires d'aimants de respectivement deux électroaimants (13) voisins l'un de l'autre, qui ont des polarités magnétiques différentes l'une de l'autre et entre deux paires d'aimants de chaque phase (U, V, W) se trouve respectivement une paire d'aimants de chacune des deux autres phases (U, V, W) et respectivement deux électroaimants (13) voisins l'un de l'autre de phases (U, V, W) différentes l'une de l'autre ont la même polarité magnétique.

17. Machine (1) électrique tournante suivant l'une des revendications précédentes,
**caractérisée en ce que** les parties (23) amagnétiques de l'élément (5) de réaction sont en un matériau céramique.

18. Machine (1) électrique tournante suivant l'une des revendications précédentes,
**caractérisée en ce que** les parties (25) aimantables de l'élément (5) de réaction sont en un matériau à magnétisme doux.
